# EUROPEAN PATENT SPECIFICATION

(11) **EP 1 946 283 B1**
(45) Date of publication and mention of the grant of the patent: **29.02.2012**
(21) Application number: 05821828.0
(22) Date of filing: 26.12.2005
(51) Int. Cl.: G08G 1/09

(54) **APPARATUS AND METHOD FOR TRANSFERRING TRAFFIC DATA**
VORRICHTUNG UND VERFAHREN ZUM TRANSFER VON VERKEHRSDATEN
APPAREIL ET PROCEDE PERMETTANT DE TRANSFERER DES DONNEES DE TRAFIC

(30) Priority: 12.11.2005 KR 20050108289
(43) Date of publication of application: 23.07.2008
(73) Proprietor: Electronics and Telecommunications Research Institute, Daejeon-city 305-350 (KR)
(72) Inventor: LEE, Myung-jin, Daejeon-city 305-350 (KR); CHOI, Jong-woo, Daejeon-city 301-758 (KR); LEE, Moon-soo, Daejeon-city 305-769 (KR); KWON, Oh-cheon, Daejeon-city 305-728 (KR)
(74) Representative: Betten & Resch
(86) International application number: PCT/KR2005/004527
(87) International publication number: WO 2007/055439

(56) References cited:
- DE-A1- 19 750 774
- FR-A1- 2 760 282
- JP-A- 2003 346 284
- JP-A- 2004 015 743
- JP-A- 2004 212 143
- US-A- 5 528 628
- US-B2- 6 898 515

## Description

### 1. Field of the Invention

The present invention relates to the transmittance of traffic information via a broadcasting network and, more particularly, to an apparatus and method for losslessly minimizing traffic information, reducing a bandwidth necessary for transmitting the traffic information, and transmitting the traffic information.

### 2. Description of the Related Art

The number of vehicles on the road is increasing, as is drivers' interest in traffic flow. Therefore, drivers wish to receive better traffic information than before. Traffic information is provided to drivers via a public radio paging network (PRPN), an FM data radio channel (DARC), code division multiple access (CDMA), a transport protocol experts group (TPEG) using digital multimedia broadcasting (DMB), etc.

The FM DARC was globally standardized in 1995, and provides an additional FM broadcasting service providing digital information at about 2000 English characters (1000 Korean characters) per second.

The FM DARC can ignore influence on an adjacent frequency band due to an additional DARC signal, uses a high quality FM frequency band that transmits well, and can quickly build a data broadcasting network. However, the FM DARC has shadowing regions.

Meanwhile, TPEG is a new ISO/ECN standard for transmitting traffic and travel information (TTI) in a digital broadcasting system such as DMB, DAB, DVB, the Internet, etc. Also, TPEG provides a new protocol regarding applications, services, and transmission characteristics in a multimedia environment for encoding, decoding, and filtering a message relating to travel when transmitting information on traffic and travel.

TPEG supports various receivers such as a simple text unit, a message filtering unit, a voice unit, a route-planning system, a navigation system, etc., and provides services to users who have no location database or navigation system. Also, TPEG provides services to users who have a location database or a navigation system so that the performance of the location database or the navigation system can be improved.

However, a method of transmitting traffic information using the TPEG standard does not include processing redundant data Included in the traffic information.

DE 19750774 A1 discloses an apparatus and method for optimized transmission of traffic data in order to efficiently inform terminal users. Particularly, the apparatus comprises a database for classifying the traffic status into traffic information indexes including areas, road codes indicating roads in the areas and average car speeds measured on the roads, a traffic information classifier for classifying the traffic status based on the average car speeds and a number of roads, and a transmitter for generating and transmitting a traffic information message.

US 5528628 A discloses an apparatus for variable length coding using a plurality of Huffman coding tables.

### SUMMARY OF THE INVENTION

The present invention as defined in the independent claims provides an apparatus and method for losslessly minimizing traffic information through redundant information transmission using a telematics service provider (TSP) and transmitting the traffic information, thereby effectively using the bandwidth of a broadcasting network and reducing the processing load of a terminal.

An apparatus for transmitting traffic information comprises: a database classifying traffic status into traffic information indexes including areas, road codes indicating roads in the areas and average car speeds measured on the roads, and storing the classified traffic status; a traffic information classifier classifying the traffic status stored in the database based on the average car speeds measured on the roads and the numbers of roads on which the respective average car speeds are measured; a code generator applying variable length coding (VLC) to the traffic status classified by the traffic information classifier and generating speed codes corresponding to the average car speeds using VLC based on the number of roads; and a message transmitter generating a traffic information message including one or more road codes per one or more areas based on the traffic information index, average car speeds corresponding to the one or more road codes, and a speed code table including the average car speeds, and transmitting the traffic information message.

A method of transmitting traffic information comprises: classifying traffic status into traffic information Indexes including areas, road codes indicating roads in the areas and average car speeds measured on the roads, and storing the classified traffic status; classifying the traffic status based on the average car speeds measured on the roads and the numbers of roads on which the respective average car speeds are measured; applying VLC to the classified traffic status and generating speed codes corresponding to the average car speeds using VLC based on the number of roads; generating a traffic information message including one or more road codes per one or more areas based on the traffic information index, average car speeds corresponding to the one or more road codes, and a speed code table including the average car speeds; and transmitting the traffic information message.

### BRIEF DESCRIPTION OF THE DRAWINGS

The above and other features and advantages of the present Invention will become more apparent by describing In detail exemplary embodiments thereof with reference to the attached drawings in which:
FIG. 1 is a block diagram of a system for providing traffic information through a broadcasting network according to an embodiment;
FIG. 2 Illustrates a coding method of minimizing information on average speeds of vehicles according to an embodiment;
FIG. 3 is a block diagram of an apparatus for transmitting traffic information according to an embodiment;
FIG. 4 is a block diagram of a traffic information message according to an embodiment,
FIG. 5 is a block diagram of a telematics terminal receiving a traffic information message according to an embodiment; and
FIG. 6 is a flowchart illustrating a method of receiving and processing a traffic information message using a telematics terminal according to an embodiment.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Like reference numerals in the drawings denote like elements.

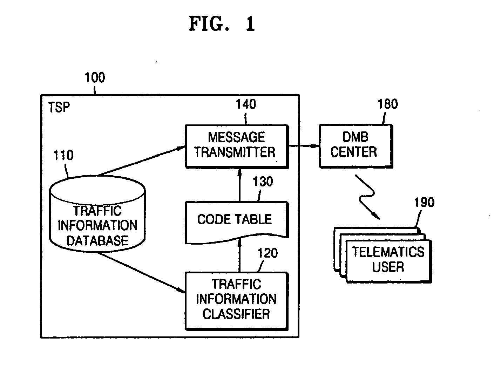

FIG. 1 is a block diagram of a system for providing traffic information through a broadcasting network according to an embodiment. Referring to FIG. 1, the system comprises a telematics service provider (TSP) 100, a digital multimedia broadcasting (DMB) center 180, and telematics users 190.

The TSP 100 comprises a traffic information database 110, a traffic information classifier 120, a code table 130, and a message transmitter 140.

The TSP 100 classifies a traffic status, stores the classified traffic status in the traffic information database 110, and rearranges the traffic status stored in the traffic information database 110 based on an index of average speeds of vehicles measured on roads and an index of the numbers of roads on which the respective average speeds are measured obtained from the traffic information classifier 120. The code table 130 creates a speed code corresponding to the average speeds of vehicles measured on the roads through variable length coding (VLC), and converts traffic information into a traffic information message format suitable for transmission by the message transmitter 140.

The TSP 100 transmits the traffic information message to the telematics users 190 via a telematics terminal through the DMB center 180. In the present embodiment, the telematics terminal is a terminal that receives broadcasting.

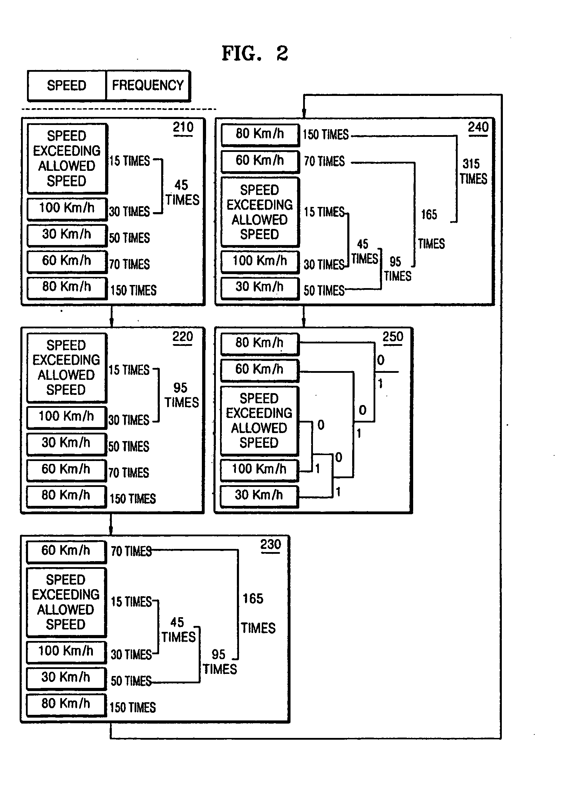

FIG. 2 illustrates a coding method of minimizing information on average speeds of vehicles according to an embodiment. The coding method is a Huffman coding method, which utilizes VLC. The present invention includes all technical ideas identical or similar to a coding method of minimizing information using VLC.

The traffic information classifier 120 classifies traffic information based on the index of average speeds of vehicles measured on roads and an index of the numbers of roads on which the respective average speeds are measured.

That is, the traffic information is classified into twenty links of a speed at 60Km/h, fifty links of a speed at 80Km/h, and thirty links of a speed at 100Km/h for a total of one hundred links. A speed code table 210 is generated to minimize the number of link speeds using VLC.

In the Huffman coding method, two indexes having the lowest frequency in a matrix including speed and frequency are summed (Operation 210), the speeds are rearranged according to frequency, and the summed value is added to the lowest frequency (Operation 220) (The drawing for this operation should be corrected in FIG. 2), the speeds are rearranged according to frequency, and the summed value is added to the lowest frequency again (Operation 230), the speeds are rearranged according to frequency, and the summed value is added to the lowest frequency again (Operation 240), and upper and lower nodes in a finally arranged tree are respectively designated as 0 and 1 (Operation 250).

Thereafter, 30Km/h, 80Km/h, 80Km/h, 100Km/h, and a speed exceeding a maximum legal speed are encoded as 111, 10, 0, 1101, and 1100, respectively.

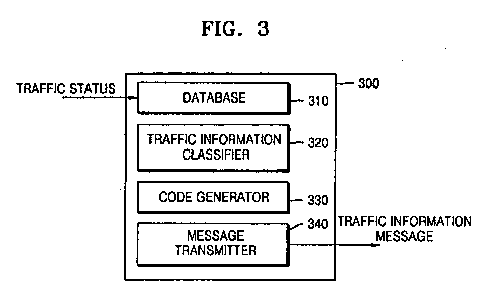

FIG. 3 is a block diagram of an apparatus 300 for transmitting traffic Information according to an embodiment. Referring to FIG. 3, the apparatus 300 comprises a database 310, a traffic information classifier 320, a code generator 330, and a message transmitter 340.

The database 310 classifies traffic status into traffic information indexes of areas, road codes indicating specific roads in the areas, and average car speeds measured on the specific roads, and stores the classified traffic status.

The traffic information classifier 320 classifies the traffic status stored in the database 310 based on indexes of the average car speeds measured on the roads and the number of roads on which the respective average car speed is measured.

The code generator 330 performs VLC on the traffic status classified by the traffic information classifier 320 and generates speed codes corresponding to the average car speeds using VLC based on the number of roads having the respective average car speeds.

The reduction in bandwidth resulting from the application of VLC according to the embodiment illustrated in FIG. 2 will now be described.

If VLC is not applied, the amount of speed information is 8 bits x (15+30+50+70+150)=2520 bits.

If VLC is applied, the amount of speed information is 15 x 4 bits + 30 x 4 bits +50 x 3 bits + 70 x 2 bits +150 x 1 bit + 80 bits = 700 bits.

That is, the bandwidth can be reduced by more than two-thirds when VLC is applied to the embodiment illustrated in FIG. 2.

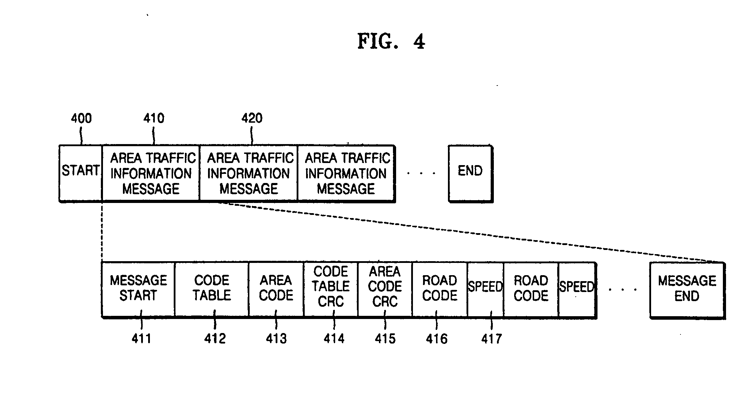

The message transmitter 340 generates a traffic information message including at least one road code per at least one area based on the traffic information index, average car speeds corresponding to the at least one road code, and a speed code table including the average car speeds, and transmits the traffic information message. The traffic information message will now be described in detail with reference to FIG. 4.

FIG. 4 is a block diagram of a traffic information message according to an embodiment. Referring to FIG. 4, the traffic information message includes one or more area traffic information messages 410 and 420 respectively including traffic information on one or more areas.

Each of the area traffic information messages 410 and 420 includes a message start 411 and a message end, a speed code table 412, an area code 413 indicating a specific area, a code table CRC 414 detecting loss or distortion of the speed code table 412, an area code CRC 415 detecting loss or distortion of the area code 413, road codes 416 indicating specific roads, and average speeds 417 of vehicles measured on specific roads indicated by the road codes 418. The area traffic information messages 410 and 420 include one or more road codes 416 and the average speeds 417 corresponding to the road codes 416.

The traffic information message includes the speed code table 412 generated using the coding method illustrated in FIG. 2, the area code 413 (for example, Jongro-ku in Seoul has an area code 1000) by city/district/county, the code table CRC 414 for detecting an error of the code table 412 and the area code 413, the area code CRC 415, the road codes 416 (for example, Sejong-ro located in Jongro-ku in Seoul has an area code 00000001) of each of the areas, and the average speeds 417 of vehicles on each of the roads.

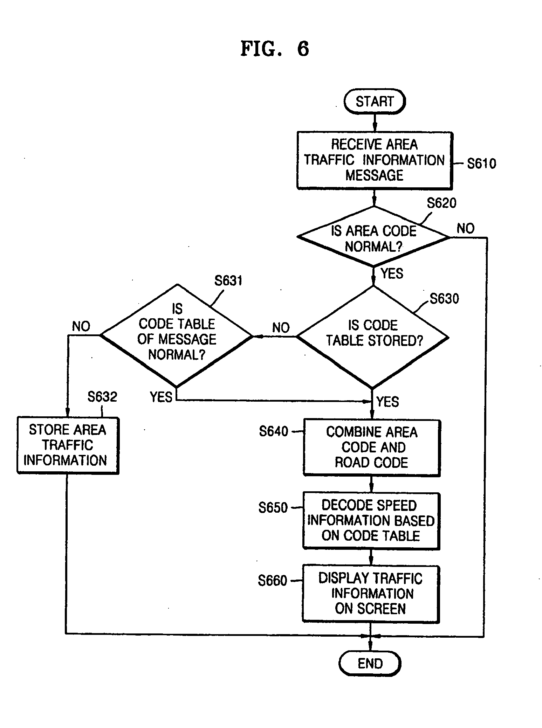

If the speed code table 412 of the area traffic information message 410 is damaged when transmitting the traffic information message, a telematics terminal can be reused by replacing the speed code table of the area traffic information message 420 with the speed code table 412 of the area traffic information message 410. A method of reusing the traffic information message by replacing the speed code table of the traffic information message will be described later with reference to FIG. 6.

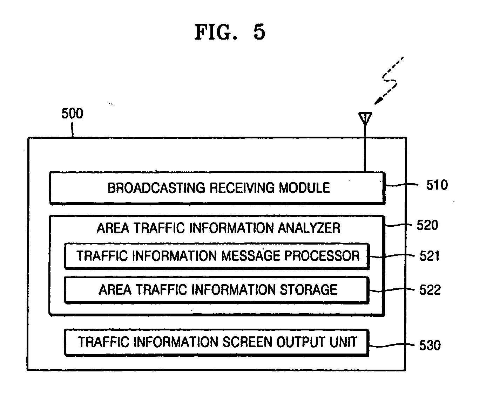

FIG. 5 is a block diagram of a telematics terminal 500 receiving a traffic information message according to an embodiment. Referring to FIG. 5, the telematics terminal 500 comprises a broadcasting receiving module 510 that receives the traffic information message transmitted via a broadcasting network, an area traffic information analyzer 520 that analyzes area traffic information included in the traffic information message, and a traffic information screen output unit 530 that outputs the traffic information.

The area traffic information analyzer 520 comprises a traffic information message processor 521 that processes area traffic information messages, and an area traffic information storage 522 that temporarily stores a current traffic information message to use a speed code table of another area traffic information message when a speed code table of the current traffic information message is damaged.

FIG. 6 is a flowchart illustrating a method of receiving and processing a traffic information messages using a telematics terminal according to an embodiment. Referring to FIG. 6, the telematics terminal receives the traffic information message, and confirms whether the area code 413 of the area traffic information message 410 extracted from the traffic information message is normal by checking the area code CRC 415 (Operations S610 and S620). If the area code 413 is damaged or distorted, the telematic terminal ends processing of the traffic information message.

If the area code 413 is normal, it is determined whether the telematics terminal stores the speed code table 412 (Operation S630), If the telematics terminal does not store the speed code table 412, the telematics terminal determines whether the speed code table of the area traffic information message 410 is normal based on the code table CRC 414 (Operation S631).

If the speed code table 412 is damaged, the area traffic information message 410 is stored in the telematics terminal (Operation S632). Thereafter, if the telematics terminal reads the traffic information message 420 of another area and receives the speed code table, the telematics terminal processes the previous traffic information message 410 using the received speed code table of the traffic information message 420.

If the speed code table 412 is normal, the telematics terminal combines an area code end a road code, decodes a speed corresponding to the road code based on the speed code table, and displays traffic information on a screen (Operations S640, S650, and S660).

The present invention can also be embodied as computer readable code on a computer readable recording medium. The computer readable recording medium is any data storage device that can store data which can be thereafter read by a computer system, Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion.

The present invention transmits redundant traffic information via a broadcasting network, thereby losslessly minimizing traffic information.

The present invention also effectively uses the bandwidth of the broadcasting network using a method of minimizing the traffic information in real-time and reducing a processing load of a terminal.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An apparatus (100, 300) for transmitting traffic information, the apparatus (100, 300) comprising:
a database (110, 310) classifying traffic status into traffic information indexes including areas, road codes indicating roads in the areas and average car speeds measured on the roads, and storing the classified traffic status;
a traffic information classifier (120, 320) classifying the traffic status stored in the database (110, 310) based on the average car speeds measured on the roads and the numbers of roads on which the respective average car speeds are measured;
a code generator (130, 330) applying variable length coding (VLC) to the traffic status classified by the traffic information classifier (120, 320) and generating speed codes corresponding to the average car speeds using VLC based on the number of roads; and
a message transmitter (140, 340) generating a traffic information message including one or more road codes per one or more areas based on the traffic information index, average car speeds corresponding to the one or more road codes, and a speed code table including the average car speeds,
wherein the traffic information message is transmitted to telematics terminals via a broadcasting network, and
wherein, when the speed code table of the traffic information message is damaged, the telematics terminal replaces the damaged speed code table of the traffic information message with the speed code table of a traffic information message including information on another area.

2. A method of transmitting traffic information, the method comprising:
classifying traffic status into traffic information indexes including areas, road codes indicating roads in the areas and average car speeds measured on the roads, and storing the classified traffic status;
classifying the traffic status based on the average car speeds measured on the roads and the numbers of roads on which the respective average car speeds are measured;
applying variable length coding (VLC) to the classified traffic status and generating speed codes corresponding to the average car speeds using VLC based on the number of roads;
generating a traffic information message including one or more road codes per one or more areas based on the traffic information index, average car speeds corresponding to the one or more road codes, and a speed code table including the average car speeds; and
transmitting the traffic information message,
wherein the traffic information message is transmitted to telematics terminals via a broadcasting network, and
wherein, when the speed code table of the traffic information message is damaged, the telematics terminal replaces the damaged speed code table of the traffic information message with the speed code table of a traffic information message including information on another area.

## Patentansprüche

1. Vorrichtung (100, 300) zum Senden von Verkehrsinformationen, wobei die Vorrichtung (100, 300) umfasst:
eine Datenbank (110, 310), um einen Verkehrsstatus in Verkehrsinformationsindexe zu klassifizieren, die Bereiche, Straßencodes, die Straßen in den Bereichen angeben, und durchschnittliche Fahrzeuggeschwindigkeiten, die auf den Straßen gemessen werden, enthalten, und um den klassifizierten Verkehrsstatus zu speichern;
einen Verkehrsinformationsklassifizierer (120, 320), um den in der Datenbank (110, 310) gespeicherten Verkehrsstatus anhand der durchschnittlichen Fahrzeuggeschwindigkeiten, die auf den Straßen gemessen werden, und der Anzahl von Straßen, auf denen die jeweiligen durchschnittlichen Fahrzeuggeschwindigkeiten gemessen werden, zu klassifizieren;
einen Code-Generator (130, 330), um eine Codierung (VLC) mit variabler Länge auf den durch den Verkehrsinformationsklassifizierer (120, 320) klassifizierten Verkehrsstatus anzuwenden und um unter Verwendung der VLC anhand der Anzahl von Straßen Geschwindigkeitscodes, die den durchschnittlichen Fahrzeuggeschwindigkeiten entsprechen, zu erzeugen; und
einen Nachrichtensender (140, 340), um eine Verkehrsinformationsnachricht zu erzeugen, die einen oder mehrere Straßencodes pro einem oder mehreren Bereichen enthält, anhand des Verkehrsinformationsindexes, der durchschnittlichen Fahrzeuggeschwindigkeiten, die dem einen oder den mehreren Straßencodes entsprechen, und einer Geschwindigkeitscode-Tabelle, die die durchschnittlichen Fahrzeuggeschwindigkeiten enthält,
wobei die Verkehrsinformationsnachricht an Telematikendgeräte über ein Rundsendenetz gesendet wird, und
wobei dann, wenn die Geschwindigkeitscode-Tabelle der Verkehrsinformationsnachricht beschädigt ist, das Telematikendgerät die beschädigte Geschwindigkeitscodetabelle der Verkehrsinformationsnachricht durch die Geschwindigkeitscode-Tabelle einer Verkehrsinformationsnachricht, die Informationen eines weiteren Bereichs enthält, ersetzt.

2. Verfahren zum Senden von Verkehrsinformationen, wobei das Verfahren umfasst:
Klassifizieren eines Verkehrsstatus in Verkehrsinformationsindexe, die Bereiche, Straßencodes, die Straßen in den Bereichen angeben, und durchschnittliche Fahrzeuggeschwindigkeiten, die auf den Straßen gemessen werden, enthalten, und Speichern des klassifizierten Verkehrsstatus;
Klassifizieren des Verkehrsstatus anhand der durchschnittlichen Fahrzeuggeschwindigkeiten, die auf den Straßen gemessen werden, und der Anzahl von Straßen, auf denen die jeweiligen durchschnittlichen Fahrzeuggeschwindigkeiten gemessen werden;
Anwenden einer Codierung (VLC) mit variabler Länge auf den klassifizierten Verkehrsstatus und Erzeugen von Geschwindigkeitscodes, die den durchschnittlichen Fahrzeuggeschwindigkeiten entsprechen, unter Verwendung der VLC anhand der Anzahl von Straßen;
Erzeugen einer Verkehrsinformationsnachricht, die einen oder mehrere Straßencodes pro einem oder mehreren Bereichen enthält, anhand des Verkehrsinformationsindexes, durchschnittlicher Fahrzeuggeschwindigkeiten, die dem einen oder den mehreren Straßencodes entsprechen, und einer Geschwindigkeitscode-Tabelle, die die durchschnittlichen Fahrzeuggeschwindigkeiten enthält; und
Senden der Verkehrsinformationsnachricht,
wobei die Verkehrsinformationsnachricht zu Telematikendgeräten über ein Rundsendenetz gesendet wird, und
wobei dann, wenn die Geschwindigkeitscode-Tabelle der Verkehrsinformationsnachricht beschädigt ist, das Telematikendgerät die beschädigte Geschwindigkeitscode-Tabelle der Verkehrsinformationsnachricht durch die Geschwindigkeitscode-Tabelle einer Verkehrsinformationsnachricht, die Informationen eines weiteren Bereichs enthält, ersetzt wird.

## Revendications

1. Appareil (100, 300) pour transmettre des informations de trafic, l'appareil (100, 300) comprenant :
une base de données (110, 310) classant le statut du trafic dans des index d'informations de trafic comprenant des zones, des codes de routes indiquant des routes dans les zones et des vitesses de véhicule moyennes mesurées sur les routes, et stockant le statut de trafic classé ;
un classificateur d'informations de trafic (120, 320) classant le statut de trafic stocké dans la base de données (110, 310) sur la base des vitesses de véhicule moyennes mesurées sur les routes et les numéros des routes sur lesquelles les vitesses de véhicule moyennes respectives sont mesurées ;
un générateur de code (130, 330) appliquant un codage de longueur variable (VLC) au statut de trafic classé par le classificateur d'informations de trafic (120, 320) et générant des codes de vitesse correspondant aux vitesses de véhicule moyennes en utilisant un VLC basé sur le numéro des routes ; et
un émetteur de message (140, 340) générant un message d'information de trafic comprenant un ou plusieurs codes de route pour une ou plusieurs zones sur la base de l'index d'informations de trafic, les vitesses de véhicule moyennes correspondant aux un ou plusieurs codes de route, et une table de code de vitesse comprenant les vitesses de véhicule moyennes,
dans lequel le message d'informations de trafic est transmis à des terminaux télématiques via un réseau de diffusion, et
dans lequel, lorsque la table de code de vitesse du message d'informations de trafic est endommagée, le terminal télématique remplace la table de code de vitesse endommagée du message d'information de trafic par la table de code de vitesse d'un message d'information de trafic comprenant des informations sur une autre zone.

2. Procédé de transmission d'informations de trafic, le procédé comprenant :
la classification du statut de trafic dans des index d'informations de trafic comprenant des zones, des codes de routes indiquant des routes dans les zones et des vitesses de véhicule moyennes mesurées sur les routes, et le stockage du statut de trafic classé ;
la classification du statut de trafic sur la base des vitesses de véhicule moyennes mesurées sur les routes et les numéros des routes sur lesquelles les vitesses de véhicule moyennes respectives sont mesurées ;
l'application d'un codage de longueur variable (VLC) au statut de trafic classé et la génération de codes de vitesse correspondant aux vitesses de véhicule moyennes en utilisant un VLC basé sur le numéro des routes ;
la génération d'un message d'information de trafic comprenant un ou plusieurs codes de route pour une ou plusieurs zones sur la base de l'index d'informations de trafic, les vitesses de véhicule moyennes correspondant au(x) un ou plusieurs codes de routes, et une table de code de vitesse comprenant les vitesses de véhicule moyennes ; et
la transmission du message d'informations de trafic,
dans lequel le message d'informations de trafic est transmis à des terminaux télématiques via un réseau de diffusion, et
dans lequel lorsque la table de code de vitesse du message d'informations de trafic est endommagée, le terminal télématique remplace la table de code de vitesse endommagée du message d'information de trafic par la table de code de vitesse d'un message d'information de trafic comprenant des informations sur une autre zone.
